# DEMANDE DE BREVET EUROPEEN

(11) **EP 3 771 334 A1**
(43) Date de publication de la demande: **03.02.2021**
(21) Numéro de dépôt: 20315354.9
(22) Date de dépôt: 22.07.2020
(51) Int. Cl.: A01K 47/00, A01K 47/06

(54) **COUVRE TOIT VENTILÉ AMOVIBLE DE PROTECTION THERMIQUE DES RUCHES**

(30) Priorité: 30.07.2019 FR 1908650
(71) Demandeur: Notteghem, Jean-Loup, 34820 Assas (FR)
(72) Inventeur: Notteghem, Jean-Loup, 34820 Assas (FR)

(57) **Abrégé**

L'invention est un dispositif de limitation des excès de chaleur transmis par les toits des ruches vers l'intérieur de la ruche lors des périodes estivales. Ce dispositif est un couvre toit ventilé et amovible, qui se pose sur les ruches à toit plan sans modification de ces ruches. Il apporte un ombrage au toit (1) par un écran (6) qui arrête le rayonnement solaire et il permet une dissipation de la chaleur par une ventilation naturelle d'un espace aménagé entre le couvre toit et le toit. Il est pour cela pourvu de cales(9) et d'orifices d'aération (8) calibrés et positionnés pour permettre une ventilation naturelle efficace.

## Description

### Domaine technique

Cette invention est du domaine de l'amélioration de la régulation thermique des ruches. C'est un dispositif de protection thermique proposé pour les périodes estivales pendant lesquelles l'ensoleillement a un effet négatif sur les colonies d'abeilles. Il est basé sur deux mécanismes: un ombrage du toit de la ruche qui est obtenu par un écran posé sur la ruche et une dissipation de la chaleur par circulation naturelle d'une lame d'air entre le toit de la ruche et cet écran. L'ensemble écran d'ombrage et son dispositif d'adaptation à la ruche forme un toit additionnel, un "couvre toit" aéré et amovible, qui se pose sur le toit existant de toute ruche, sans modification ni adaptation de celle-ci.

État de la technique antérieure.

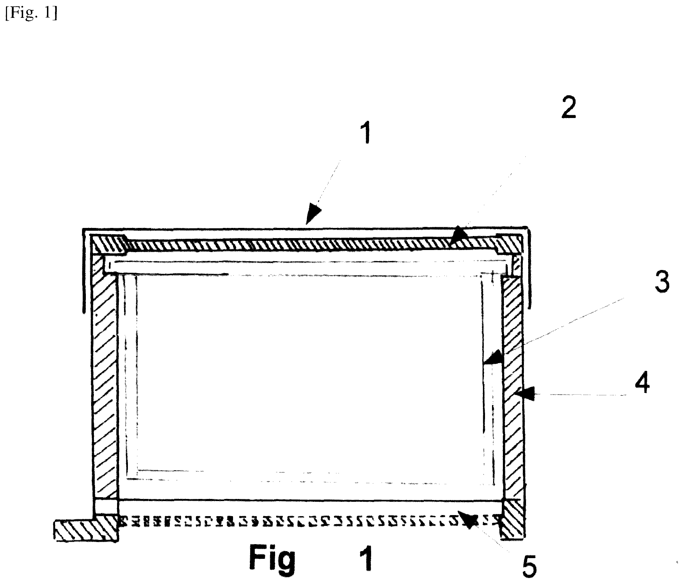

Les abeilles régulent la température de la cavité dans laquelle elles s'installent, que ce soit une cavité naturelle, tronc d'arbre creux, cavité de paroi rocheuse, ou artificielle ( la ruche). La ruche est souvent imparfaite du point de vue de l'isolation thermique qu'elle procure à la colonie d'abeilles. En effet, pour assurer le développement des larves qui forment le couvain, la température au sein de la grappe d'abeilles doit être maintenue proche de 34°C, ce qui est obtenu par une activité intense des ouvrières pour réchauffer ou pour refroidir l'environnement interne de la ruche. (Sale temps pour les abeilles, Agnès Fayet, 2017, Abeille et cie , 179, 28-31). La thermo régulation du couvain (ensemble des œufs, larves et nymphes) est essentielle au bon développement de la colonie. La température optimum de 34°C est obtenue l'hiver par un travail des abeilles de la caste des ouvrières qui fabriquent de la chaleur en faisant fonctionner leurs muscles et l'été par la ventilation de la ruche et l'évaporation de l'eau du nectar et d'eau collectée dans l' environnement. Ces activités nécessitent une dépense énergétique très importante qui, en cas de situation de déficit de ressources, peuvent conduire à l'épuisement des réserves de la ruche, ce qui entraîne un affaiblissement qui peut être fatal à la colonie. C'est la cause d'une partie des pertes actuellement observées en plus des autres causes également majeures que sont les difficultés du contrôle du parasite varroa ainsi que l'exposition aux pesticides. Lors des périodes estivales, les toits des ruches qui sont soumises à un fort ensoleillement, absorbent le rayonnement solaire et transmettent la chaleur vers l'intérieur de la ruche. La température des toits métalliques, les plus utilisés dans de nombreuses régions d'Europe, atteint souvent plus de 60°C. Le rafraîchissement de la ruche est assuré par une partie des ouvrières qui ventilent l'entrée de la ruche et favorisent l'évaporation d'eau, celle du nectar non encore transformé en miel et l'eau collectée dans l'environnement par une des "castes" d'abeilles ouvrières. Cette collecte d'eau représente une dépense énergétique qui est importante et mal quantifiée. Pour faciliter le travail des abeilles collectrices d'eau, lorsque les points d'eau naturels manquent ou sont éloignés, les apiculteurs mettent en place des abreuvoirs. L'observation des ruches montre que lors de chaleurs excessives la part des ouvrières mobilisée à cette tache est très importante et limite fortement les autres activités. Les travaux scientifiques menés sur l'effet des fortes températures sur les colonies d'abeilles sont peu nombreux, citons cependant les publications de Lensky Y (ann. Abeille , 1964 7 (1) 23-45; Journal of insect physiology, 1964, vol 10,pp 1,12) qui, dans les années 60, a analysé les conséquences de températures élevées sur les colonies d'abeilles. Dans des conditions expérimentales pendant lesquelles les températures ont dépassé 48°C les abeilles réussissent à maintenir la température du couvain en dessous de 37,6°C. Il a mesuré, pour des ruches placées à l'ombre une récolte de miel d'été double de celles de ruches identiques placées au soleil. il montre également que le type de peinture de la ruche utilisé a un rôle important sur la récolte. Une ruche (fig 1) standard telle que le modèle Dadant, le plus utilisé, est composée de différents éléments, un fond (5) le plus souvent partiellement ou totalement grillagé ou perforé, un «corps»(4)(les parois verticales de la ruche), un couvre-cadre(2) paroi mince qui fait l'étanchéité supérieure de la ruche, et d'un toit (1) qui protège ce couvre cadre des intempéries. Les modèles les plus utilisés sont constitués de cadres (3) en planches de bois, d'épaisseur de 25 ou 27mm, différentes essences sont utilisées. Les fonds (5) sont en bois et grillage ou en plastique, le plus souvent partiellement ou totalement perforés. Le couvre cadre (2) est le plus souvent fait de contreplaqué mince (environ 5mm) ou d' isorel. La protection contre les intempéries est obtenue avec un toit plan qui est fait de planches de bois (toit dit américain posé sans couvre cadre) ou d'une tôle d'acier galvanisé mince qui est le modèle majoritaire en Europe pour les apiculteurs professionnels. Plus rarement bois et feuille métallique sont associés, pour des toits plans ou pour les toits à double pente dits « toits chalets » utilisés pour les ruches d'agrément des apiculteurs amateurs et dans des régions de montagne. La conception des ruches est le résultat d'un compromis entre différents critères et les caractéristiques thermiques des modèles les plus employés ne sont pas optimum. Des panneaux minces d'isolants additionnels sont régulièrement utilisés, très fréquemment pour la protection du froid hivernal. Les ruches en polystyrène dense ont fait leur apparition, elles garantissent une bonne isolation et sont de plus en plus utilisées dans les pays nordiques. Leur utilisation est encore limitée du fait de leur prix, de leur relative fragilité et des dégâts que peut y faire un commensal des ruches, le papillon de la fausse teigne des ruches (2 espèces sont en cause), dont la chenille est capable de trouer le polystyrène. Par ailleurs seules les ruches en bois, sont autorisées en apiculture ayant le label AB agriculture biologique. Une très grande majorité des ruches actuellement utilisées sont en bois et en France et très fréquemment en Europe, avec un toit métallique plan. Il est donc très important pour un apiculteur d'optimiser l'isolation des ruches pour assurer un environnement favorable au développement des abeilles. Les efforts principaux pour l'isolation des ruches sont faits pour la protection du froid hivernal. Pour cela des isolants type isolant mince réflectif associé ou non a des panneaux de polystyrène expansé ou extrudé sont placés sous le toit métallique et des «parois isolantes» peuvent être placées sur les faces latérales internes des ruches. Dans les contrées à hiver très froids comme le Canada les ruches sont, soit hivernées en hangar à température constante, soit enveloppées d'épaisses couches d'isolants. Pour limiter les effets négatifs de la chaleur estivale, les possibilités d'actions des apiculteurs sont limitées. Des peintures réfléchissantes sont utilisées pour peindre le corps de la ruche et réfléchir ainsi les rayons du soleil qui atteignent les cotés verticaux de la ruche. Cependant la partie la plus exposée au soleil est le toit de la ruche. Une majorité d'apiculteurs européens utilise des toits plans métalliques qui, exposés au soleil peuvent atteindre des températures très élevées de plus de 60°C. Cette chaleur diffuse dans la ruche à travers le couvre cadre. Cependant, l'utilisation des toits métalliques présente de nombreux avantages, ils sont solides, durables, permettent l'empilement des ruches pour leur stockage ou pour les transhumances et protègent efficacement les essaims des intempéries. Les toits en bois, plans, dits toits américains présentent des avantages similaires mais ils ne protègent pas non plus les abeilles des chaleurs excessives. Il est possible d'éviter l'ensoleillement estival en plaçant les ruchers à l'ombre de la végétation, mais cette possibilité n'est pas toujours utilisée pour plusieurs raisons. L'hiver, l'exposition des ruches au soleil est favorable aux abeilles qui ont besoin de chaleur, des ruchers exposés au soleil sont donc parfois privilégiés. D'autres critères que l'ensoleillement doivent être pris en compte, la qualité de la flore environnante, les risques dus aux pesticides, l'éloignement de chemins de passage publiques, l'accessibilité, il est donc complexe de trouver des situations qui satisfassent à tous les critères. L'emplacement des ruchers temporaires est encore plus contraint et, par exemple, les dizaines de milliers de ruches emmenées dans les régions de culture de la lavande ou de tournesol, où l'ombre est rare, sont, pour la plupart exposées au soleil du mois de Juillet et Août. Dans un contexte de réchauffement climatique et de périodes caniculaires plus fréquentes, la protection des ruches contre la chaleur apparaît de plus en plus importante. Les améliorations des ruches ont été essentiellement basées sur des modifications des éléments des ces ruches. De nombreuses versions des toits ont été décrites et des éléments permettant la ventilation de l'intérieur des ruches sont proposés à l'utilisateur. La méthode de protection des ruches contre le rayonnement solaire excessif la plus employée, mais non généralisée, est la mise en place d'isolants tels que les isolants de type réflectif multi-couche ou les plaques en polystyrène expansé ou extrudé, dans la ruche, entre le toit et le couvre cadre. Cet isolant limite le transfert de calories du toit vers l'intérieur de la ruche. Cependant avec un différentiel de température entre le toit métallique et l'intérieur de la ruche, qui dépasse souvent 30°C pendant plusieurs heures par jour, et des isolants qui ne dépassent généralement pas 2 cm d'épaisseur, le transfert de chaleur dans la ruche reste très important. D'autres méthodes ont fait l'objet d'utilisations locales comme la mise en place de toit végétalisé, ou l'empilement d'isolants épais sur le toit. D'autres pratiques sont parfois utilisées telle que l'ombrage artificiel du rucher par un écran de grande taille ou l'utilisation de tentes individuelles sous lesquelles les ruches sont installées. D'autres dispositifs ayant comme objectif une régulation de l'ambiance de l'intérieur de la ruche sont basés sur des systèmes de climatisation individuelle de la ruche par des systèmes de ventilation et/ou de chauffage, ils sont pourvus d'une régulation électronique (brevetWO2015087198A1/fr). Différents type de toits ont été inventés (the évolution of beehive cover,Thomson J , Bee culture, dec 2017), un type de toit, le toit « gable » est un toit à double paroi, à double pente, le plus souvent en bois recouvert ou non d'une tôle métallique. Il est pourvu de 2 orifices de ventilation entre les parois, pour limiter les excès de chaleur transmis dans la ruche. Les toits des ruches de type Warré peuvent également disposer de deux fentes de ventilation d'un espace situé au dessus du couvre cadre. De même les toits dit toits chalets peuvent comporter des orifices permettant une aération de la partie supérieure de la ruche, au dessus du couvre cadres qui est dans ce cas intégré au toit. Ces toits ventilés sont des alternatives efficaces aux toits plans non ventilés, ils sont donc des éléments des ruches et non pas des dispositifs additionnels aux ruches. Leur utilisation n'est pas généralisée. En effet le choix du toit est soumis à différentes contraintes qui ont conduit à une utilisation très majoritaire de toits plans, soit de toit plan en bois dit «américains» (Thomson J , Bee culture, the évolution of beehive cover, 7 nov 2017) soit de toits métalliques plans posés sur un couvre cadres. Les toits ventilés de type « gable » n'ont pas les mêmes caractéristiques que les toits plans en ce qui concerne le coût, l'ergonomie du travail au rucher, les possibilités de superposition des ruches en stockage et lors du transport en transhumance, ce qui en limite l'acceptation. Un nouveau dispositif utilisable sans modification des ruches, pouvant être posé sur les toits plans employés par les apiculteurs, aurait l'avantage d'apporter une protection thermique pour le matériel existant.

### Exposé de l'invention

L'invention proposée est un dispositif additionnel aux ruches à toits plans, qui protège les abeilles de la ruche du transfert des excès de chaleur provenant du rayonnement solaire auquel le toit est exposé. Ce dispositif est un «couvre toit» ventilé amovible qui permet simultanément:

• D'apporter une protection thermique des ruches sans modification de ces ruches.
- De supprimer l'exposition au soleil des toits des ruches par la pose d'un panneau individuel qui fait écran.
- De dissiper la chaleur par une circulation d'air naturelle entre ce couvre toit et le toit de la ruche.
- De pouvoir moduler la régulation thermique en choisissant la période de l'année pendant laquelle le couvre toit est installé.

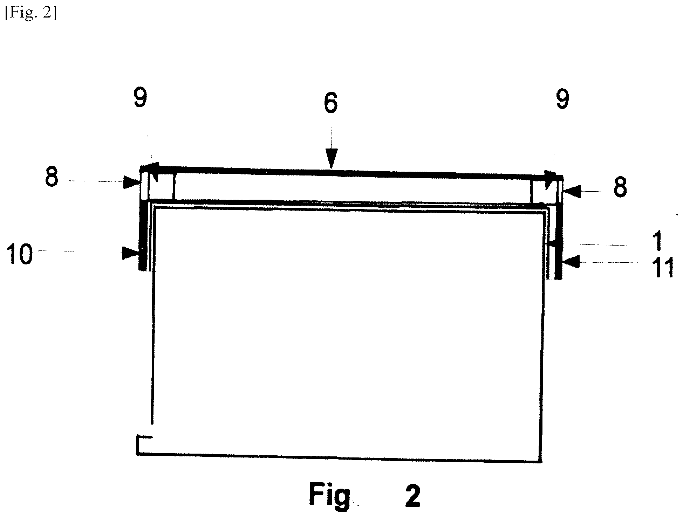

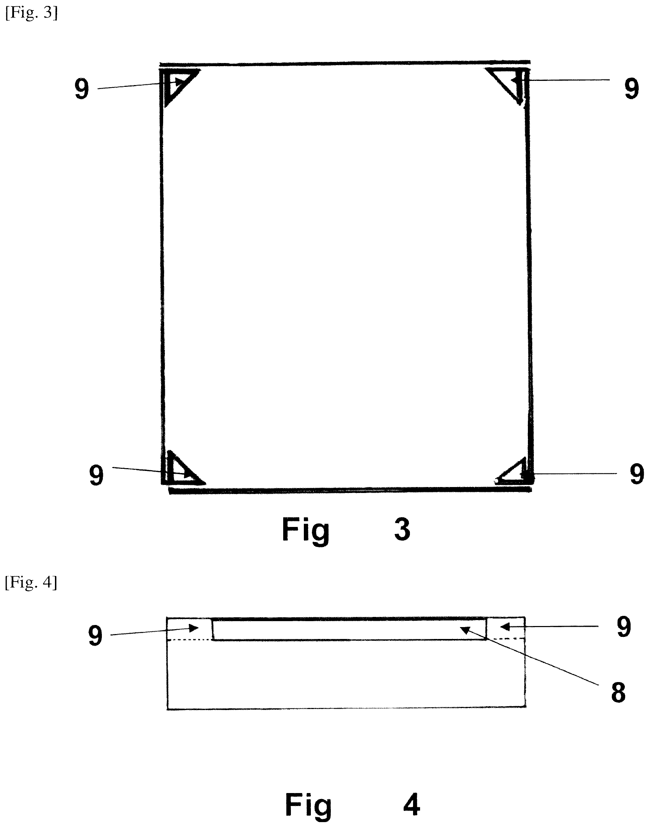

Ce "couvre toit" est un ensemble d'un panneau horizontal, qui constitue l'écran principal, et de 4 panneaux latéraux qui s'emboîtent sur le toit de la ruche. Dans le cas de ruches avec toit métallique plan, les panneaux latéraux recouvrent les cotés du toit de la ruche et participent à l'isolation. Le couvre toit est conçu de manière à aménager un espace entre le panneau supérieur du couvre cadre et le toit de la ruche. Des cales de faible surface sont intégrées au couvre toit, elles permettent de poser le couvre toit sur le toit de la ruche et leur hauteur définit la hauteur de l'espace aménagé entre le toit et le couvre toit. Les panneaux latéraux comportent un ou des orifices, aussi grands que possible sans diminuer la solidité de l'ensemble, et suffisants pour assurer une circulation d'air efficace entre le toit de la ruche et le panneau supérieur du couvre toit. Le positionnement d'un modèle plan de couvre toit ventilé posé sur le toit d'une ruche est montré par la Fig2, une vue du dessous de ce modèle de couvre toit ventilé est montrée sur la Fig 3 et la face avant de ce même modèle est représentée sur la Fig 4. Ce couvre toit se pose sur les modèles très largement répandus de ruches à toit plan et ceci sans aucune modification de ces ruches. Il est le plus souvent destiné à des utilisations temporaires pendant les périodes de fort ensoleillement, lorsque qu'un excès de chaleur a un effet négatif sur les colonies d'abeilles . Ce dispositif est amovible ce qui permet à l'apiculteur de moduler, selon les saisons, l'effet de l'ensoleillement des ruches. Ce dispositif est à la fois très efficace et relativement peu coûteux, ce qui assure la rentabilité de son utilisation. Il peut être fabriqué avec différents matériaux, ceux ci doivent être opaques, de préférence de faible conductivité thermique, réfléchissant sur une face et résistants aux intempéries. Les couvre toits peuvent donc être fabriqués en bois, en tôle métallique, en plastique, en polystyrène, mais aussi en carton ondulé. Un traitement en adéquation avec le matériau utilisé est appliqué. Différents modèles conçus sur le même principe pourront être proposés. Le panneau supérieur peut être plan, mais il est peut également être conçu avec une pente unique ou avec une double pente pour faciliter l'écoulement de l'eau de pluie. Le panneau supérieur peut être rallongé par des auvents qui apportent un supplément d'ombre sur les faces verticales du corps de la ruche situées sous l'auvent. Différents dispositifs de fixation du couvre toit sont possibles, soit aux poignées de la ruche soit au bord inférieur, du toit, ou de la ruche, ils peuvent être adaptés au type de ruche. Ce couvre toit peut être décliné en différentes dimensions correspondant, d'une part à la taille des toits des différents formats de ruches: Dadant, Langstroh principalement mais aussi de tout autre modèle, et d'autre part au nombre de cadres contenus dans les ruches et qui conditionnent leur largeur: 12, 10, 6 et 5 cadres.

Les dessins annexés illustrent l'invention :
[fig.1] Schéma en coupe longitudinale d'une ruche classique montrant ses différents éléments: le fond aéré (5), le corps (4), le couvre cadre (2) le toit métallique(1) et le contenu: des cadres support des rayons de cire (3).
[fig.2] Exemple de dispositif de couvre toit aéré en carton ondulé en coupe longitudinale positionné sur le toit (1) d'une ruche et qui montre le panneau supérieur du couvre toit (6) les panneaux frontal (10) et postérieur (11), les ouvertures sous forme de fentes frontale et postérieure (8) et les cales de support (9)
[fig.3] Vue de dessous d'un couvre toit mettant en évidence les 4 cales d'angle(9).
[fig.4] Vue de face d'un couvre toit mettant en évidence la fente frontale (8) et la position des cales (9)
[fig.5] Exemple de plan de découpe d'un "couvre toit" en carton, avant pliage et collage, mettant en évidence la découpe des fentes (8) et des cales (9).

### Exposé d'un mode de réalisation

Différents matériaux sont utilisables pour la fabrication des couvres toits ventilés notamment ceux habituellement utilisés en apiculture, le bois, la tôle métallique, le plastique , le polystyrène et le carton ondulé . Le carton ondulé est utilisé en apiculture notamment pour la fabrication de ruchettes qui ont fait leur preuve, le plus souvent pour des utilisations de quelques mois à quelques années, il est également utilisé pour des boites grillagées de transport d'essaims. L'acceptation de ce matériau pour une utilisation apicole ne pose pas de difficulté particulière, c'est un matériau habituel pour de nombreux apiculteurs.

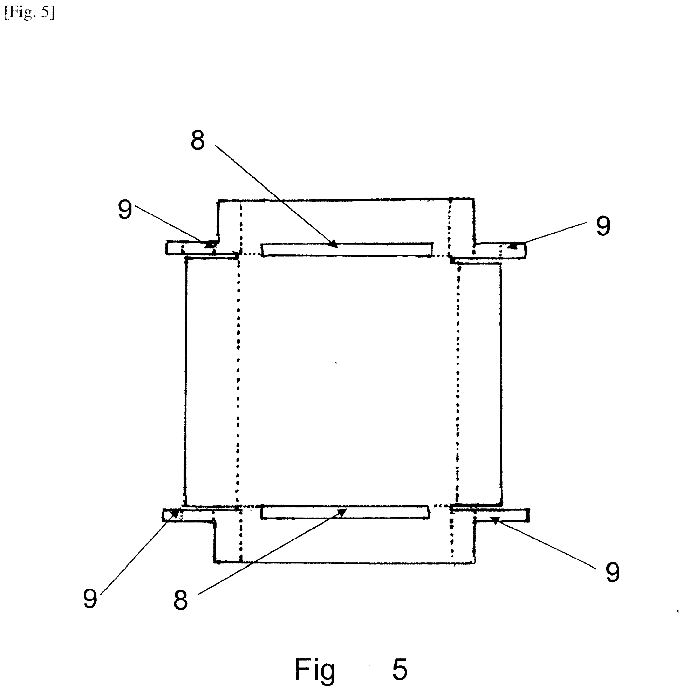

La paroi supérieure du couvre toit doit être réfléchissante, le matériau utilisé devra être opaque et de préférence mauvais conducteur de la chaleur. Sur la base de ces critères un carton ondulé blanc est un matériaux approprié, il est de plus économique. Il a d'autres caractéristiques importantes, la légèreté et la possibilité de diminuer l'encombrement en fabriquant un couvre toit pliable. La Fig 5 montre le plan de découpe d'un modèle de couvre toit ventilé qui est représenté sous différentes faces sur les Fig 2,3 et 4. L'invention n'est pas limitée au mode de réalisation présenté, l'homme du métier saura y apporter toute variante amélioratrice. D'autres modèles ayant un toit pourvu d'une pente unique ou double, facilitant l'écoulement de la pluie peuvent également être fabriqués selon la même méthode. Le pliage et l'assemblage par collage de cette découpe permet une fabrication facile à industrialiser très fréquemment utilisée en cartonnerie.

### Modes d'applications industriels:

Cette invention ne pourra avoir d'impact positif sur la filière apicole qu'à la condition d'être accessible à un grand nombre d'apiculteurs, aux apiculteurs amateurs qui sont très nombreux à posséder quelques ruches, et aux professionnels qui gèrent quelques centaines de ruches. L'industrie de la cartonnerie possède les savoirs faire et les outils pour la production en très grande séries d'emballages, cartons, cagettes etc... Les procédés de l'industrie de la cartonnerie pourront donc être utilisés pour la production de couvre toits de ruches. Les cartonneries proposent la fabrication de cartons prédécoupés dont le montage revient à l'utilisateur ou de produits finis prêts à l'emploi. De même les couvres toits pourront être proposés: soit sous la forme de plaques de carton prédécoupées qui laisseront à l'apiculteur le montage et le traitement contre l'humidité (huile de lin, peinture ou lasure sont généralement utilisés), soit sous forme de couvre toit terminé, assemblé et traité contre l'humidité, prêt à l'utilisation.

## Revendications

1. Dispositif pour protéger les ruches contre les excès de chaleur due au rayonnement direct du soleil, **caractérisé en ce qu'**il est une structure individuelle qui se pose sur la ruche, composée d'un panneau supérieur positionné au dessus du toit de la ruche qu'il recouvre et de panneaux latéraux.

2. Dispositif selon la revendication 1 **caractérisé en ce que** sa structure comprend des cales qui assurent un espace entre le panneau supérieur du dispositif et le toit de la ruche.

3. Dispositif selon les revendications 1 et 2 **caractérisé en ce que** sa structure comprend des ouvertures en forme de fentes faisant communiquer l'espace situé entre le dispositif et le toit de la ruche, et l'extérieur.

4. Dispositif selon les revendications 1 et 2 **caractérisé en ce que** les panneaux verticaux s'emboîtent sur le toit de la ruche.
